# EUROPÄISCHE PATENTANMELDUNG

(11) **EP 1 724 842 A2**
(43) Veröffentlichungstag der Anmeldung: **22.11.2006**
(21) Anmeldenummer: 06009298.8
(22) Anmeldetag: 05.05.2006
(51) Int. Cl.: H01L 31/042

(54) **Verblendung für eine Fläche, insbesondere für eine Gebäudefläche**

(30) Priorität: 18.05.2005 DE 102005023569; 11.08.2005 DE 102005038327
(71) Anmelder: Goldbeck Solar GmbH, 69493 Hirschberg an der Bergstrasse (DE)
(72) Erfinder: Goldbeck, Joachim, 69469 Weinheim (DE)
(74) Vertreter: Naumann, Ulrich

(57) **Zusammenfassung**

Eine Verblendung für eine Fläche, insbesondere für eine Gebäudefläche, vorzugsweise für eine Fassade, ein Dach oder dergleichen, mit einer Vielzahl von Solarmodulen (2) und einer zwischen der Fläche und den Solarmodulen (2) wirkenden Haltekonstruktion (1), wobei die Solarmodule (2) zumindest einen Teil der Fläche abdecken oder überdecken, ist dadurch gekennzeichnet, dass die Solarmodule (2) in einem für die Einstrahlung des Sonnenlichts günstigen bis optimalen Winkel zur Fläche beabstandet, vorzugsweise in Reihen, angeordnet sind und dass zwischen den Solarmodulen (2) bzw. Reihen ein Reflektor (3) oder eine Reihe von Reflektoren (3) angeordnet ist, wobei der Reflektor (3) oder die Reflektoren (3) in einem solchen Winkel zur Fläche und zu den Solarmodulen (2) angeordnet ist/sind, dass dort vorzugsweise unter einem optimalen Winkel/Winkelbereich auftreffendes Licht ganz oder ganz überwiegend zu einem benachbarten Solarmodul (2) oder zu einer benachbarten Reihe von Solarmodulen (2) reflektiert wird.

## Beschreibung

Die Erfindung betrifft eine Verblendung für eine Fläche, insbesondere für eine Gebäudefläche, vorzugsweise für eine Fassade, ein Dach oder dergleichen, mit einer Vielzahl von Solarmodulen und einer zwischen der Fläche und den Solarmodulen wirkenden Haltekonstruktion, wobei die Solarmodule zumindest einen Teil der Fläche abdecken oder überdecken.

Verblendungen der hier in Rede stehenden Art in den unterschiedlichsten Ausführungsformen aus der Praxis bekannt. So werden insbesondere bei größeren Gebäuden, so beispielsweise bei Bürohäusem, Lagerhallen oder sonstigen Industriegebäuden, Blendwerke aus den unterschiedlichsten Materialien verwendet. Die Vorkehrung solcher Blendwerke hat den Vorteil, dass sich darunter konstruktionstechnische Maßnahmen wie auch Versorgungsleitungen oder dergleichen verbergen lassen. Durch die Verblendung lässt sich eine einheitliche Erscheinung der Oberfläche realisieren. Verblendungen aus Natursteinplatten, aber auch aus Glas oder aus sonstigen Baustoffen sind üblich.

Aus der Praxis ist es auch bereits bekannt, die Oberfläche von Fassaden mit Solarmodulen zu bestücken, wobei zwischen der jeweiligen Fläche des Gebäudes und den Solarmodulen eine Haltekonstruktion vorgesehen ist. Meist sind solche Solarmodule in strenger Geometrie einzeln oder in Reihe zueinander angeordnet und überdecken einen Teil der Fläche. So ist es bereits üblich, fotovoltaische Solarmodule in das sonstige Blendwerk der Fassade zu integrieren, so dass die Solarmodule Bestandteil der Verblendung sind. Üblicherweise sind solche Solarmodule parallel zu der Fassade mit geringem Abstand dazu angeordnet.

Aufgrund der konkreten Anordnung der aus der Praxis bekannten Solarmodule, die zumindest teilweise zur Verblendung einer Gebäudefassade verwendet werden, ist es jedoch nachteilig, dass diese nur selten unter einem optimalen Winkel für die Einstrahlung des Sonnenlichts angeordnet sind. Ihre fotovoltaische Leistung ist daher regelmäßig stark reduziert. Außerdem sind die Fassaden meist nur bereichsweise mit entsprechenden Solarmodulen ausgestattet, so dass auch insoweit die Energieausbeute begrenzt ist.

Der vorliegenden Erfindung liegt daher die Aufgabe zugrunde, eine Verblendung für eine Fläche, insbesondere eine Gebäudefläche, vorzugsweise für eine Fassade, ein Dach oder dergleichen, der gattungsbildenden Art derart auszugestalten und weiterzubilden, dass die Solarmodule in statisch geeigneter Weise einen wesentlichen Bestandteil der Verblendung bilden, wobei gegenüber bisherigen Anordnungen die Energieausbeute optimiert sein soll.

Die voranstehende Aufgabe wird durch eine Verblendung gemäß den Merkmalen des Patentanspruchs 1 gelöst. Danach ist die gattungsbildende Verblendung dadurch gekennzeichnet, dass die Solarmodule in einem für die Einstrahlung des Sonnenlichts günstigen bis optimalen Winkel zur Fläche beabstandet, vorzugsweise in Reihen, angeordnet sind und dass zwischen den Solarmodulen bzw. Reihen ein Reflektor oder eine Reihe von Reflektoren angeordnet ist, wobei der Reflektor oder die Reflektoren in einem solchen Winkel zur Fläche und zu den Solarmodulen angeordnet ist/sind, dass dort vorzugsweise unter einem optimalen Winkel/Winkelbereich auftreffendes Licht ganz oder ganz überwiegend zu einem benachbarten Solarmodul oder zu einer benachbarten Reihe von Solarmodulen reflektiert wird. Die Solarmodule sind vorzugsweise in Reihen angeordnet. Mit anderen Worten wurde hier von der üblichen Praxis abgewichen, wonach man Solarmodule stets parallel und mit Abstand zur Fassade angeordnet hat, um diese in das übliche Blendwerk integrieren zu können. Ganz im Gegenteil wird hier eine strukturierte Oberfläche dadurch geschaffen, dass die einzelnen Solarmodule oder ganze Reihen der Solarmodule unter einem für die Einstrahlung des Sonnenlichts günstigen bis optimalen Winkel mit Abstand zur Fläche des Gebäudes bzw. zu einer entsprechenden Unterkonstruktion angeordnet und in dieser Position sicher gehalten sind.

Zwischen den Solarmodulen bzw. den Reihen von Solarmodulen ist ein weiteres wesentliches Bauteil vorgesehen, nämlich ein Reflektor oder eine Reihe von Reflektoren. Der Reflektor oder die Reihen der Reflektoren sind in einem solchen Winkel zur Fläche des Gebäudes und zu den Solarmodulen angeordnet, dass dort vorzugsweise unter einem optimalen Winkel/Winkelbereich auftreffendes Licht ganz oder ganz überwiegend zu einem benachbarten Solarmodul oder zu einer benachbarten Reihe von Solarmodulen reflektiert wird. Die Bestrahlung der einzelnen Solarmodule ist dadurch verbessert.

Erfindungsgemäß sind somit neben den eigentlichen Solarmodulen Reflektoren vorgesehen, die das zunächst nicht auf die Solarmodule auftreffende Licht von der Oberfläche der Reflektoren zu den Solarmodulen umlenken, so dass die Solarmodule, um ein gesteigertes Maß mit Sonnenlicht bestrahlt werden. Die Vorkehrung der Reflektoren hat darüber hinaus den Vorteil, dass je nach Ausrichtung auch über den Tagesverlauf hinweg eine Reflektion des Sonnenlichts zu den Solarmodulen hin stattfindet, so dass die Energieausbeute über die gesamte Phase der Sonneneinstrahlung begünstigt ist.

Im Rahmen einer einfachen Ausgestaltung ist zu jedem Solarmodul ein Reflektor vorgesehen, wobei dieser Reflektor dazu dient, dort auftreffendes Licht auf ein unmittelbar benachbartes Solarmodul umzulenken. In vorteilhafter Weise ist zu jeder Reihe von Solarmodulen eine Reihe von Reflektoren vorgesehen, so dass sich die Reihen von Solarmodulen und Reflektoren - nebeneinander beziehungsweise hintereinander oder untereinander angeordnet - abwechseln. Die Anordnung der Reihen von Reflektoren und Solarmodulen haben den Effekt, dass die Lichtbündelung über den gesamten Tagesverlauf auf die Reihen der Solarmodule fällt.

Zur Ausbildung einer homogenen Verblendung ist es von Vorteil, wenn der Reflektor an das Solarmodul anschließt. Im Falle der Verblendung einer Fassade, beispielsweise der Fassade einer Industriehalle oder dergleichen, könnte der Reflektor vertikal unter dem Solarmodul angeordnet sein, so dass sich eine entsprechende Anordnung der Reihen von Solarmodulen und Reflektoren ― jeweils in Reihe untereinander angeordnet - ergibt.

In weiter vorteilhafter Weise schließt die Reihe der Reflektoren an die Reihe der Solarmodule an, wobei im Falle der Verblendung einer Fassade die einzelnen Reihen vertikal untereinander angeordnet sind. Entsprechend ergibt sich die Anordnung der Reihen der Solarmodule und der Reihen der Reflektoren dahingehend, dass diese - für sich gesehen - im Wesentlichen horizontal ausgerichtet sind.

In weiter vorteilhafter Weise bilden die Solarmodule und die Reflektoren eine mehr oder weniger geschlossene Verblendung, wobei die Solarmodule und die Reflektoren aneinander anschließen. In optischer Hinsicht lässt sich dadurch eine in sich geschlossen wirkende Verblendung der gesamten Fassade realisieren, wobei die Fläche optimal mit Solarmodulen ausgestattet ist. Außerdem bietet die Verblendung einen wirksamen Wetterschutz.

Wie bereits zuvor ausgeführt, eignet sich die Solarmodule und Reflektoren umfassende Verblendung in idealer Weise zur Abdeckung von fassadenspezifischen Strukturen, vor allem aber auch zur Abdeckung von Versorgungsleitungen oder dergleichen. Außerdem lässt sich eine Hinterlüftung der Verblendung gegenüber der Fassadenoberfläche realisieren. Eine solche Hinterlüftung wird dadurch begünstigt, dass zwischen den Solarmodulen und/oder den Reflektoren bzw. zwischen den Reihen der Solarmodule und/oder den Reihen der Reflektoren Durchlässe, vorzugsweise in Form von Schlitzen, Spalten oder dergleichen, vorgesehen sind. Die Durchlässe dienen zur Zirkulation von Luft und somit zur Hinterlüftung, so dass die Verblendung auch zur wirksamen Abschottung des Gebäudes gegen Sonneneinstrahlung bei gleichzeitiger Hinterlüftung dient.

Zur Begünstigung des Wirkungsgrades ist es von weiterem Vorteil, wenn die Solarmodule und die Reflektoren derart abgewinkelt zur Fläche des Gebäudes und/oder zueinander angeordnet sind, dass sie sich abgewinkelt zueinander entlang der Fläche des Gebäudes erstrecken. Im Falle der Anordnung der Solarmodule und der Reflektoren in Reihen zueinander sind die Reihen der Solarmodule und der Reflektoren derart abgewinkelt zueinander angeordnet, dass sich die gesamten Reihen im Sinne einer Faltung zueinander über die Fläche erstrecken.

Im Konkreten sind die Solarmodule und Reflektoren unter einem Außenwinkel α, β zwischen den Solarmodulen und den Reflektoren wechselweise größer als 90° und kleiner als 180° (α) einerseits und größer 180° und kleiner als 270° (β) andererseits zueinander angeordnet. Diese Anordnung ergibt die zickzackförmige Ausgestaltung der durch die Solarmodule und Reflektoren gebildeten Reihen zueinander, wobei stets eine Reihe der Reflektoren das Licht auf eine benachbarte Reihe von Solarmodulen lenkt.

In weiter vorteilhafter Weise und zur Realisierung einer homogen erscheinenden Verblendung können die Solarmodule und die Reflektoren unter einem identischen Winkel zur darunterliegenden Fläche bzw. Haltekonstruktion gegeneinander aufgestellt sein. So wie eine Reihe von Solarmodulen von der zu verblendenden Fläche bzw. Unterkonstruktion abragt, so ragte die Reihe der Reflektoren ebenfalls von der Fläche bzw. oder Konstruktion ab, jedoch in einem Winkel gegen die Solarmodule, wobei es von Vorteil ist, wenn sich die freien Enden der Solarmodule und Reflektoren treffen. So lassen sich die Reflektoren zum Abstützen der Solarmodule und auch als Absturzsicherung für die Solarmodule nutzen.

In weiter vorteilhafter Weise lässt sich der Winkel δ der Solarmodule und/oder der Reflektoren zur Horizontalen verändern, insbesondere zur Anpassung an die jeweilige Sonneneinstrahlung im Tagesverlauf. Auch durch diese Maßnahme lässt sich die Energieausbeute bzw. der Wirkungsgrad der Solarmodule begünstigen. Die Änderung der Winkelposition kann hydraulisch, pneumatisch oder elektromotorisch durch einen entsprechenden Antrieb erfolgen. Gegebenenfalls erfolgt die Betätigung und die jeweiligen Arretierung über ein entsprechend wirkendes Gestänge.

In ganz besonders raffinierter Weise lässt sich der Winkel der Solarmodule zur Fläche beziehungsweise oder Horizontalen über eine Verschiebung der Anlenkstelle beziehungsweise der Anlenkmittel des Reflektors an der Fläche verändern, so dass sich dadurch der Winkel zwischen Solarmodul und Reflektor ändern lässt. Im Rahmen einer solchen Ausgestaltung wirkt der Reflektor unmittelbar auf das Solarmodul, wobei sich das Solarmodul durch Winkeländerung des Reflektors mehr oder weniger aufstellen und senken lässt.

In besonders raffinierter Weise sind die Reflektoren als Bestandteil der Haltekonstruktion ausgeführt. Dabei sind die Reflektoren derart ausgeführt, dass sie mit ihren freien Enden die Solarmodule in ihrer jeweiligen Winkelposition zur Fassade oder zur Haltekonstruktion hin abstützen. Somit kommt den Reflektoren eine weitere Funktion zu, nämlich zu ihrer eigentlichen Funktion als Reflektor und zur Bildung einer in sich geschlossenen Verblendung auch noch eine Stützfunktion, da sie in einem solchen Falle zwischen der Unterkonstruktion bzw. der Fassade und den Solarmodulen mechanisch wirken.

Grundsätzlich ist es auch denkbar, dass sich die die Solarmodule und die Reflektoren tragende Unterkonstruktion bzw. Haltekonstruktion und/oder die zu verblendende Fläche zumindest geringfügig neigen lässt. Zusätzlich oder alternativ könnte die Unterkonstruktion bzw. Haltekonstruktion zumindest geringfügig drehbar sein. Durch beide Maßnahmen lässt sich eine abermalige Einstellung gegenüber der Sonneneinstrahlung vornehmen.

Bei den Solarmodulen kann es sich um jedwede handelsübliche Solarmodule handeln, wobei diese vorzugsweise als flächige Solarkollektoren oder als flächige fotovoltaische Solarzellen ausgeführt sind. Dabei ist es auch denkbar, dass die Solarmodule in Kombination von Solarkollektoren und Solarzellen angeordnet sind, nämlich zum einen zur Erwärmung eines strömungsfähigen Mediums und zum anderen zur fotovoltaischen Nutzung.

Die Reflektoren sind ebenfalls flächig ausgeführt und vorzugsweise in ihrer Form und Größe den einzelnen Solarmodulen angepasst. In vorteilhafter Weise sind die Reflektoren einseitig verspiegelt, so dass das von außen auftreffende Licht teilweise reflektiert wird. Das von innen kommende Licht tritt weitgehend hindurch, so dass sich auch in Bezug auf Gebäudeöffnungen vorteilhafte Anwendungsmöglichkeiten ergeben.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig.1: in einer schematischen Seitenansicht ein Ausführungsbeispiel einer erfindungsgemäßen Verblendung auf einer als Unterkonstruktion einer Fassade ausgeführten Haltekonstruktion und
- Fig. 2: in einer schematischen Vorderansicht die Verblendung aus Fig. 1.

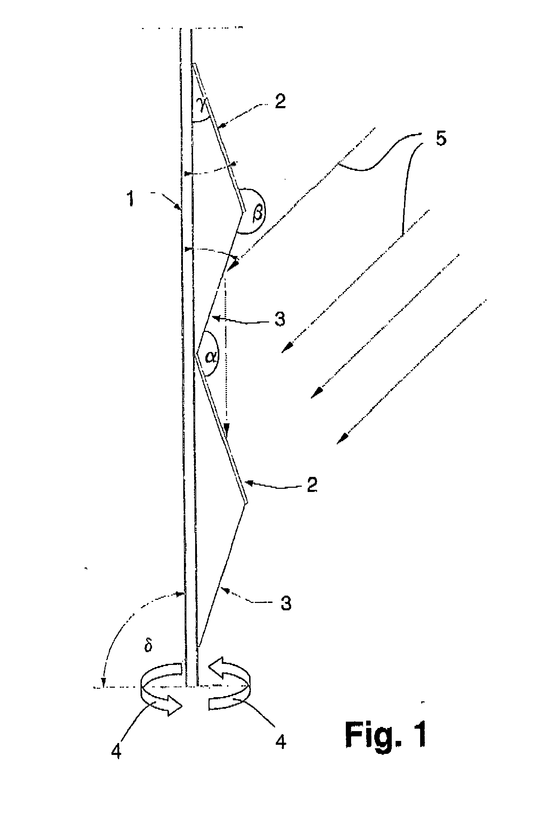

Gemäß der Darstellung in Fig. 1 umfasst die dort gezeigte Verblendung zunächst einmal eine als Haltekonstruktion 1 bezeichnete Unterkonstruktion, die wiederum einer Gebäudefassade zugeordnet ist. Die Gebäudefassade ist in den Figuren nicht gezeigt.

Des Weiteren umfasst die Verblendung Solarmodule 2 und Reflektoren 3, die gemeinsam die Fassade bzw. die Haltekonstruktion 1 abdecken bzw. überdecken. In Fig. 1 ist angedeutet, dass die auf die Reflektoren 3 treffenden Sonnenstrahlen 5 zu den Solarmodulen 2 umgelenkt werden, so dass die Solarmodule 2 direkt und indirekt mit Sonnenstrahlen 5 bestrahlt werden.

Fig. 1 zeigt des Weiteren, dass die Solarmodule 2 in einem für die Einstrahlung des Sonnenlichts günstigen bis optimalen Winkel angeordnet sind. Entsprechend der Ausrichtung der Solarmodule 2 sind die Reflektoren 3, ebenfalls unter einem vorgegebenen Winkel zur Haltekonstruktion 1 bzw. zu der darunter befindlichen Fläche angeordnet.

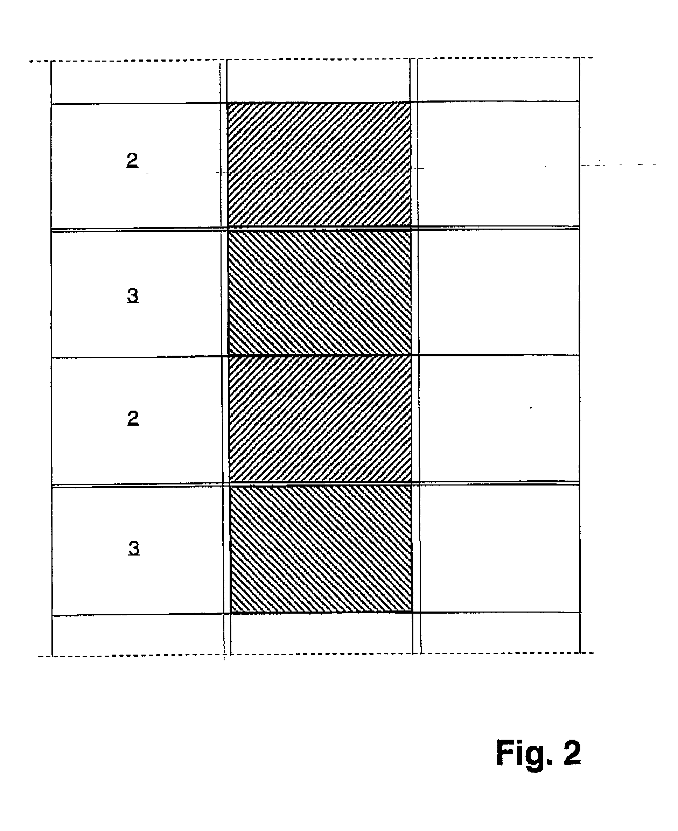

Die Fig. 1 und 2 zeigen gemeinsam, dass sowohl die Solarmodule 2 als auch die Reflektoren 3 jeweils in einer Reihe zueinander angeordnet sind.

Die Solarmodule 2 bilden insgesamt eine Modulfläche, die einerseits unmittelbar von der Sonne und andererseits über die Reflektoren 3 angestrahlt wird. Bei den Reflektoren 3 kann es sich ebenfalls um eine Reihe von Einzelreflektoren gemäß der Darstellung in Fig. 2 handeln, wobei die Reflektoren insbesondere zur Realisierung halbtransparenter Fassaden einseitig verspiegelt sind.

In Fig. 1 ist des Weiteren angedeutet, dass die Solarmodule 2 unter einem variablen Winkel γ zur Haltekonstruktion 1 bzw. zu der darunterliegenden Fassade angeordnet sein können, wodurch sich die Außenwinkel a und β zwischen den Solarmodulen 2 und den Reflektoren 3 vorzugsweise im Bereich zwischen 90° und 180° (α) einerseits und 180° und 270° (β) andererseits verändern lassen. Eine optimale Anpassung an den Stand der Sonne und somit an die Einstrahlung durch Sonnenlicht ist dadurch möglich.

Des Weiteren ist in Fig. 1 angedeutet, dass sich die Haltekonstruktion 1 bzw. die dadurch gebildete Unterkonstruktion neigen lässt, nämlich um einen Winkel δ. Auch dadurch lässt sich eine Einstellung der Solarmodule 2 und Reflektoren 3 gegenüber der Sonneneinstrahlung vornehmen. Grundsätzlich ist es auch denkbar, dass sich einzelne Bereich der Haltekonstruktion 1 oder die Haltekonstruktion 1 insgesamt zumindest geringfügig drehen lässt, was in Fig. 1 durch den Pfeil 4 angedeutet ist.

In Bezug auf Merkmale, die sich den Figuren nicht entnehmen lassen, sei zur Vermeidung von Wiederholungen auf den allgemeinen Teil der Beschreibung verwiesen.

## Patentansprüche

1. , Verblendung für eine Fläche, insbesondere für eine Gebäudefläche, vorzugsweise für eine Fassade, ein Dach oder dergleichen, mit einer Vielzahl von Solarmodulen (2) und einer zwischen der Fläche und den Solarmodulen (2) wirkenden Haltekonstruktion (1), wobei die Solarmodule (2) zumindest einen Teil der Fläche abdecken oder überdecken,
**dadurch gekennzeichnet, dass** die Solarmodule (2) in einem für die Einstrahlung des Sonnenlichts günstigen bis optimalen Winkel zur Fläche beabstandet, vorzugsweise in Reihen, angeordnet sind und dass zwischen den Solarmodulen (2) bzw. Reihen ein Reflektor (3) oder eine Reihe von Reflektoren (3) angeordnet ist, wobei der Reflektor (3) oder die Reflektoren (3) in einem solchen Winkel zur Fläche und zu den Solarmodulen (2) angeordnet ist/sind, dass dort vorzugsweise unter einem optimalen Winkel/Winkelbereich auftreffendes Licht ganz oder ganz überwiegend zu einem benachbarten Solarmodul (2) oder zu einer benachbarten Reihe von Solarmodulen (2) reflektiert wird.

2. Verblendung nach Anspruch 1, **dadurch gekennzeichnet, dass** zumindest zu einigen benachbarten Solarmodulen (2)oder zu jedem Solarmodul (2) ein Reflektor (3) vorgesehen ist oder dass zu jeder Reihe von Solarmodulen (2) eine Reihe von Reflektoren (3) vorgesehen ist.

3. Verblendung nach Anspruch 1 oder 2, **dadurch gekennzeichnet, dass** der Reflektor (3) an das Solarmodul (2) anschließt, im Falle der Verblendung einer Fassade vertikal über dem Solarmodul (2) angeordnet ist oder dass die Reihe der Reflektoren (3) an die Reihe der Solarmodule (2) anschließt, im Falle der Verblendung einer Fassade vertikal über den Solarmodulen (2) angeordnet ist.

4. Verblendung nach einem der Ansprüche 1 bis 3, **dadurch gekennzeichnet, dass** die Reihen der Solarmodule (2) und die Reihen der Reflektoren (3) im Wesentlichen horizontal ausgerichtet sind.

5. Verblendung nach einem der Ansprüche 1 bis 4, **dadurch gekennzeichnet, dass** der Winkel δ zwischen den Reihen der Solarmodule (2) und/oder der Reflektoren (3) und der Horizontalen veränderbar ist, um eine Anpassung an den Sonnenverlauf vorzunehmen.

6. Verblendung nach einem der Ansprüche 1 bis 5, **dadurch gekennzeichnet, dass** die Reflektoren (3) eine Art Stütze und Absturzsicherung für die Solarmodule bilden.

7. Verblendung nach einem der Ansprüche 1 bis 6, **dadurch gekennzeichnet, dass** die Solarmodule (2) und die Reflektoren (3) lückenlos aneinander anschließen und dabei eine geschlossene oder nahezu geschlossene Verblendung bilden.

8. Verblendung nach einem der Ansprüche 1 bis 7, **dadurch gekennzeichnet, dass** zwischen den Solarmodulen (2) und/oder den Reflektoren (3) bzw. zwischen den Reihen der Solarmodule (2) und/oder den Reihen der Reflektoren (3) Durchlässe, vorzugsweise in Form von Schlitzen, Spalten oder dergleichen, vorgesehen sind, und dass die Durchlässe zur Zirkulation von Luft bzw. zur Hinterlüftung dienen.

9. Verblendung nach einem der Ansprüche 1 bis 8, **dadurch gekennzeichnet, dass** die Solarmodule (2) und die Reflektoren (3) derart abgewinkelt zueinander angeordnet sind, dass sie sich zickzackförmig entlang der Fläche, vorzugsweise vertikal entlang der Fläche, erstrecken oder dass die Reihen der Solarmodule (2) und Reflektoren (3) derart abgewinkelt zueinander angeordnet sind, dass sie sich zickzackförmig entlang der Fläche, vorzugsweise vertikal entlang der Fläche, erstrecken, wobei die Solarmodule (2) und Reflektoren (3) unter einem Außenwinkel (α, β) zwischen den Solarmodulen (2) und den Reflektoren (3) wechselweise größer als 90° und kleiner als 180° (α) einerseits und größer als 180° und kleiner als 270° (β) andererseits zueinander angeordnet sein können.

10. Verblendung nach einem der Ansprüche 1 bis 9, **dadurch gekennzeichnet, dass** die Solarmodule (2) und die Reflektoren (3) unter einem identischen Winkel zur Fläche, gegeneinander aufgestellt, angeordnet sind.

11. Verblendung nach einem der Ansprüche 5 bis 10, **dadurch gekennzeichnet, dass** die Veränderung der Winkelpositionen über einen hydraulischen, pneumatischen oder elektromotorischen Antrieb und ggf. ein Gestänge erfolgt und/oder dass die Winkeländerungen über ein Verschieben der Anlenkstelle beziehungsweise der Befestigungsmittel des Reflektors (3) an der Fläche erfolgt, so dass sich der Winkel zwischen Solarmodul (2) und Reflektor (3) ändert.

12. Verblendung nach einem der Ansprüche 1 bis 11, **dadurch gekennzeichnet, dass** die Reflektoren (3) Bestandteil der Haltekonstruktion (1) sind.

13. Verblendung nach einem der Ansprüche 1 bis 12, **dadurch gekennzeichnet, dass** die Reflektoren (3) mit ihren freien Enden die Solarmodule (2) in ihrer Winkelposition zur Fassade oder zur Haltekonstruktion (1) hin abstützen.

14. Verblendung nach einem der Ansprüche 1 bis 13, **dadurch gekennzeichnet, dass** die Fläche und/oder die Haltekonstruktion (1) vertikal angeordnet ist und/oder dass die Fläche und/oder die Haltekonstruktion (1) zumindest geringfügig - aktiv - neigbar ist und/oder dass die Fläche und/oder die Haltekonstruktion (1) zumindest geringfügig - aktiv - drehbar ist.

15. Verblendung nach einem der Ansprüche 1 bis 14, **dadurch gekennzeichnet, dass** die Solarmodule (2) als vorzugsweise flächige Solarkollektoren/Solarzellen ausgeführt sind und/oder dass die Solarmodule (2) als Solarzellen (Votovoltaik) oder als Solarkollektoren (Solartherme) oder als Kombination von Solarkollektoren und Solarzellen ausgeführt sind.

16. Verblendung nach einem der Ansprüche 1 bis 15, **dadurch gekennzeichnet, dass** die Reflektoren (3) flächig, vorzugsweise plan, ausgeführt sind und/oder dass die Reflektoren (3) einseitig verspiegelt sind, so dass das von außen auftreffende Licht zumindest teilweise reflektiert wird und gleichzeitig die Fläche von innen halbtransparent oder zumindest teilweise transparent bleibt.
